Europäisches Patentamt

European Patent Office

Office européen des brevets

(11) Publication number: **0 419 255 A2**

# EUROPEAN PATENT APPLICATION

(21) Application number: 90310293.7

(51) Int. Cl.5: **G06K 15/00**

(22) Date of filing: **20.09.90**

(30) Priority: **20.09.89 US 410150**

(43) Date of publication of application:
**27.03.91 Bulletin 91/13**

(84) Designated Contracting States:
**DE FR GB**

(71) Applicant: **Hewlett-Packard Company
Mail Stop 20 B-O, 3000 Hanover Street
Palo Alto, California 94304(US)**

(72) Inventor: **Kalata,Steven
746 Bamboo Drive Sunnyvale
California 94086(US)**
Inventor: **Paolini, Steven
925 Tybalt Drive**
**San Jose, CA 95127(US)**
Inventor: **Thayer, Billy E
1616 N.W. 29th Street
Corvallis, OR 973300(US)**
Inventor: **Reid, Donald M.
3325 N.W. McKinley Drive
Corvallis, OR 97330(US)**
Inventor: **Brown, Charles A.
1505 N.W. Woodland Drive
Corvallis, OR 97330(US)**

(74) Representative: **Colgan, Stephen James et al
CARPMAELS & RANSFORD 43 Bloomsbury
Square
London WC1A 2RA(GB)**

(54) Method and apparatus for controlling apparent uniformity of led printheads.

(57) A power supply circuit for an LED (26) printhead has a primary current regulator (11) connected to a system reference voltage (VR) for generating a local reference voltage (VR2) for each of a plurality of integrated circuit chips. A second current regulator (23) is connected to the local reference voltage to provide a plurality of remote reference voltage signals. Each remote reference voltage is connected to binary weighted groups of FETs which provide adjustable current sources (16) in response to the presence or absence of programming data inputs. Each of the adjustable current sources are connected to a field effect transistor to provide a plurality of secondary reference voltages. Each of the secondary reference voltages are connected to the gates of field effect transistors for providing current to a plurality of light emitting diodes (26). Current flow through the field effect transistors is enabled by the presence or absence of enabling data signals.

EP 0 419 255 A2

FIG. 1

# METHOD AND APPARATUS FOR CONTROLLING APPARENT UNIFORMITY OF LED PRINTHEADS

## Background of the Invention

An LED printhead is a non-impact printer which employs an array of light emitting diodes (commonly referred to herein as LEDs) for exposing a photoreceptor surface. In such a printer, an electrostatic charge is formed on a photoreceptor surface of a moving drum or belt, and selected areas of the surface (or pixels) are discharged by exposure to light. A printing toner is applied to the drum and adheres to the drum in a pattern representative of the electrostatically charged or discharged areas. The toner is then transferred to a sheet of plain paper and is fused to the paper. By controlling the areas illuminated and the areas not illuminated, characters, lines and other images may be produced on the paper.

In an LED printer, a row, or two closely spaced or staggered rows, of minute LEDs are positioned near an elongated lens so that their images are arrayed across the surface to be illuminated. As the photoreceptive surface moves past the line of LEDs, they are selectively activated to either emit light or not, thereby exposing or not exposing, the photoreceptive surface in a pattern corresponding to the LEDs activated.

Light emitting diodes for printheads are formed on wafers of gallium arsenide or the like, suitably doped to conduct current and emit light. Long arrays of LEDs are formed on a wafer which is cut into separate dice, each having an array of LEDs. A row of such dice are assembled end to end to form a printhead array. The light output of the LEDs on a given die are usually reasonably uniform, however, there may be variations from die to die as processing parameters differ between dice. There is some variation between dice from an individual wafer and greater variation from wafer to wafer.

The LEDs are driven by power supplies on integrated circuit chips. The current output of these chips may also vary depending on processing parameters in making these chips. Such variations may compound the variations in the LED dice and further add to variations in the LED light output.

Generally, it has been considered desirable that all of the light emitting diodes produce the same light output when activated. In so doing, the printed pixels have substantially the same size and the intensity of the pixels appear to be uniform. This is usually accomplished either by sorting LED dice into categories of like properties or by compensating the LED power supplies with external components to insure uniform driving currents for LEDs of like properties. The goal of these methods is generally to assure uniform imaging properties across the LED array.

However, it has been found that it is not necessary for each printed pixel to appear equally dark, or in other words, for each light emitting diode to deliver the same energy, to obtain an image quality that appears to be noise free. The eye's sensitivity to discrete intensity levels is a function of the spatial occurrence of the different levels. For example, two pixels of different intensities may not be noticed if one occurs toward one end of the printed medium and the other occurs toward the other end of the printed medium.

Similarly, when the pixels are small and close together, the eye is not sensitive to reasonable differences in intensity between adjacent pixels. Also, gradual changes in intensity are harder for the human eye to see than abrupt changes. The eye's sensitivity to discrete intensity levels is a function of the spatial frequency of the varying intensity levels. Studies have shown that the human eye is most sensitive to spatial frequencies of 0.5 cycles/mm to 2.0 cycles/mm. The casual observer does not notice intensity differences with cycles much smaller or larger than this range.

It is desirable, therefore, to provide a power supply for an LED printhead which eliminates non-uniformities in the light output across the printhead at spatial frequencies to which the human eye is sensitive. This enhances the apparent uniformity of the prints made, even through some variation in intensity may remain outside the range of frequencies to which the eye is sensitive.

## Summary of the Invention

Thus, there is provided in practice of this invention according to one presently preferred embodiment, a programmable power supply for a light emitting diode printhead. The power supply is formed on a plurality of integrated circuit chips where each chip has a plurality of outputs for supplying current to each of a plurality of LEDs. Each such integrated circuit chip has a plurality of programmable current sources connected to a reference voltage for the entire printhead. A current is applied to each LED which is a function of a chip reference voltage on the respective chip, the presence or absence of programming data signals for each LED or each group of LEDs, and the presence or absence of an enabling data signal for the respective LED.

Preferably, LEDs are controlled in groups having a length along the row different from the distance to which the human eye is sensitive to apparent intensity differences. This enhances the apparent uniformity of images from an LED printhead. This may be done with control of current or the time of enablement of the LEDs in the group.

In an exemplary embodiment, a power supply has a master reference field effect transistor (FET), the output of which is connected to the gate of a primary driver FET. Current flows through the primary reference FET by means of a constant current source connected in series with the FET. Current is caused to flow through the primary driver FET by means of a plurality of parallel FETs connected in series between the primary driver FET and ground. The output of the parallel FETs is connected to the gate of each of a plurality of programmable current cells each consisting of binary weighted groups of similar FETs connected in series with JFET switches gated by programming data signals. Each of the programmable current cells is connected to a separate secondary reference FET. The level of current which is caused to flow through the secondary reference FETs is determined by the presence or absence of the programming data signals. The output of each of the secondary reference FETs is connected to the gate of each of a plurality of output FETs with each output FET having an output connected to a respective LED.

Brief Description of the Drawings

These and other features and advantages of the present invention will be better understood by reference to the following detailed description when considered in connection with the accompanying drawings wherein:

FIG. 1 illustrates an exemplary power supply circuit;

FIG. 2 is a schematic representation of the programmable reference current supply;

FIG. 3a is a schematic diagram of an exemplary end to end LED positioning;

FIG. 3b is a schematic diagram of an exemplary interleaved LED positioning;

FIG. 3c is a schematic diagram of another interleaved LED positioning; and

FIG. 4 illustrates a second exemplary power supply circuit.

Detailed Description

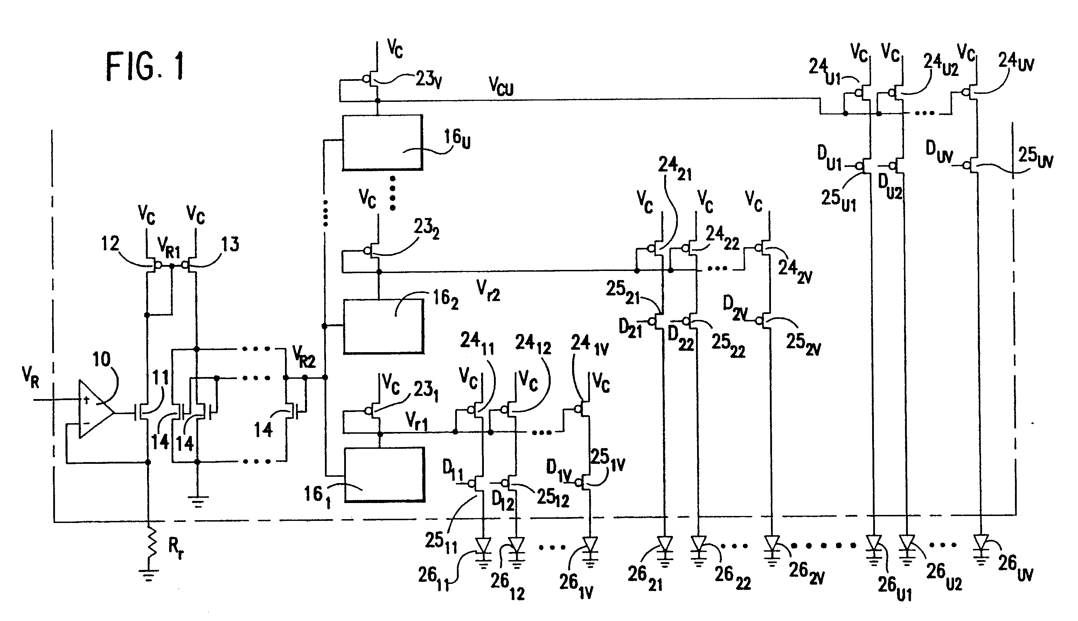

A portion of the circuits on a representative integrated circuit chip are illustrated in FIG. 1. Contact pads for making connections to the chip are omitted, as are many other details of circuits on such a chip which are not material to an understanding of this invention.

A reference voltage, $V_R$ is applied to the non-inverting input to a difference amplifier 10 (commonly referred to as an op-amp) of a reference current cell on each chip. There is nothing remarkable about the op-amp current controller, and therefore its internal circuits are not illustrated. It comprises a conventional comparator circuit, an output buffer for the comparator, a compensation capacitor to prevent oscillations, and a bias circuit for the comparator and buffer. The op-amp circuits are formed by the same processes employed for the balance of the circuitry on the integrated circuit chips.

The op-amp output is connected to the gate of an n-channel insulated gate field effect transistor 11 (FET) which acts as a current regulator or current limiter. The source of the n-channel primary current regulator FET 11 is connected to both the inverting input to the op-amp and an external reference resistor $R_r$. The drain of the primary current regulator FET is connected to the drain of a p-channel master reference FET 12. The master reference FET 12, as well as other components which provide current to the LEDs, are powered by a current supply voltage, $V_c$, common to the entire printhead.

The op-amp controls the gate of the primary current regulator FET and increases or decreases the gate voltage until the voltage at the reference resistor matches the external reference voltage $V_R$ at the non-inverting input to the op-amp. The result is a reference current $I_R$ equal to $V_R/R_{ref}$ flowing through the master reference FET. Thus, the reference current cell produces a master reference voltage $V_{R1}$ at the drain of the master reference FET 12. The internal or chip reference voltage $V_{R1}$ is not the same as the external or system reference voltage $V_R$. Exemplary operating range for the master reference voltage is from 0.5 to 2.5 volts for a current supply voltage of $V_c$ of 5 volts.

The master reference voltage $V_{R1}$ is tied to the gate of the master reference FET 12. It is also connected to the gate of a primary driver FET 13. The drain of the primary driver FET 13 is connected to the drain of each of a plurality of primary slave reference FETs $14_1$ through $14_n$. The master reference voltage $V_{R1}$ insures that the current flowing through the primary driver FET and the plurality of primary slave FETs is substantially equivalent to the current flowing through the master reference FET 12. This can be thought of as a current mirror with the same current flow through the primary driver FET 13 as the primary current regulator FET 11, or if desired, scaled to a uniform different current by having different parameters for the driver FET 13 as compared to parameters of the master reference FET 12.

The drain of each of the primary slave reference FETs $14_1$ through $14_n$ are connected to their respective gates. This creates a primary slave reference voltage $V_{R2}$ which is used at various remote locations within the integrated circuit.

The primary slave reference voltage $V_{R2}$ is in turn connected to the control gate of each of a plurality of programmable current sources denoted generally in FIG. 1 at $16_1$ through $16_u$. The number of programmable current sources 16 required depends on the desired spatial resolution of the light output. In an exemplary embodiment, the LEDs are divided into groups of eight. Therefore, since there are 64 LEDs operated by each integrated circuit chip in such an embodiment, eight programmable current sources are required per chip. If, in the above exemplary embodiment, each LED is to have its own individual programmable current, then 64 programmable current sources will be required per chip.

The group of eight LEDs is shorter than the cycle length to which the human eye is sensitive. Thus, within the group of eight, variations in exposure of the photoreceptive surface due to variations in the LEDs may be tolerated without affecting the apparent uniformity of the image produced. The average exposure by each group of LEDs can be adjusted so that it is close to the average exposure by each adjacent group of LEDs. This avoids irregularities of exposure within the frequency range where the eye is sensitive. There can also be a "drift" in exposure over distances greater than about one millimeter without the eye taking particular notice of such variations.

The number of LEDs per group is a function of the density of LEDs along the printhead. The goal is generally to limit the group size length equal to or smaller than the smallest wavelength to which the human eye is sensitive. In practice, this guideline need not strictly be adhered to since the nature of the LED dice is generally void of nonuniformities of small wavelengths up to approximately 1mm. In the above described embodiment, a group size of eight was chosen for an LED density of 400 LEDs/inch. Larger printhead densities will allow for larger LED group sizes, while smaller printhead densities will require smaller LED group sizes.

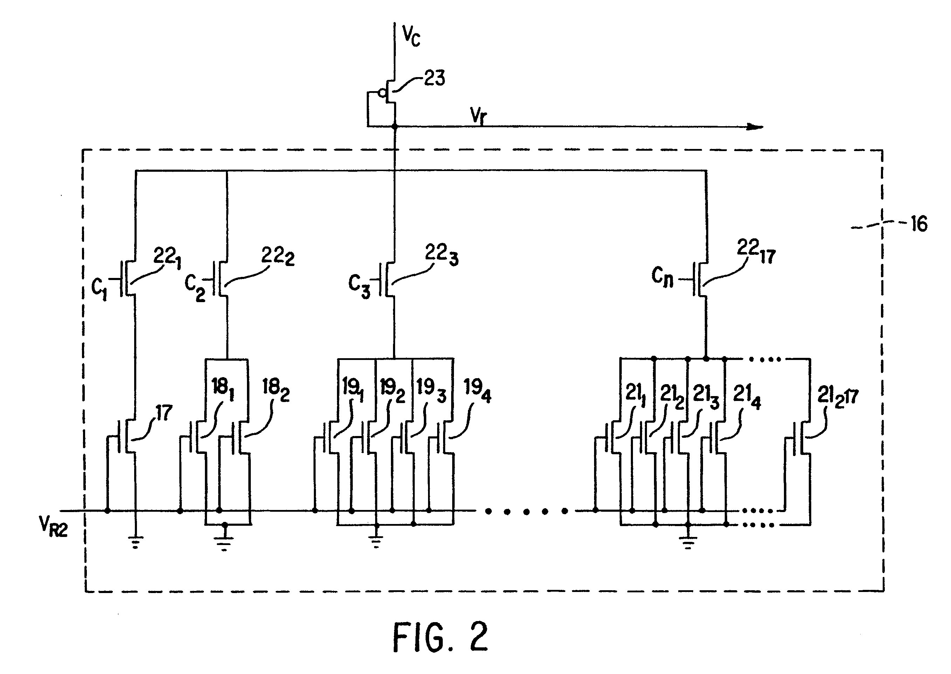

Referring now to FIG. 2, an exemplary programmable current source 16 is shown in detail. The primary slave reference voltage $V_{R2}$ is connected to the gate of each of a plurality of similar n-channel secondary current regulator FETs 17, $18_1$, and $18_2$, $19_1$ through $19_4$,... $21_1$ through $21_m$. The drain of each of the secondary current regulator FETs is coupled to the drain of the secondary reference FET 23 via programming control FETs $22_1$ through $22_n$.

In an exemplary embodiment these secondary current regulator FETs are organized into binary weighted groups. For example, current source FET 17 is a single FET in series with programming control FET $22_1$. Current source FETs $18_1$ and $18_2$ are grouped together with programming control FET $22_2$. The following group of current source FETs are in a group of four and are in series with programming control FET $22_3$. This pattern continues, with each group of current source FETs gaining in size by powers of two. In an exemplary embodiment, the largest group of current source FETs has thirty-two FETs in it. This last group of current source FETs are in series with programming control FET $22_n$. Primary slave reference voltage $V_{R2}$ provides the necessary reference to create current flow through each of the current source FETs. Each group of FETs is enabled by the presence or absence of a binary weighted programming control data word comprising programming data bits $C_1$ through $C_n$.

Conceptually, the secondary current regulator FETs operate like a FET with a programmable channel width. The more FETs that are enabled, the wider the effective channel. A wider channel results in a larger current flow through these devices. Thus, the current through the secondary reference FET 23 is controlled by enabling certain combinations of the binary weighted secondary current regulator FETs 22.

This particular architecture provides for a high current resolution which is linearly responsive to the programming data signals. It should be apparent to one skilled in the art that alternative weighting schemes can be used in the programmable current sources 16 to achieve different resolutions.

The drain of the secondary reference FET 23 is connected to the source of each of the programming control FETs $22_1$ through $22_n$. Thus, the programmable reference current cell creates a secondary reference voltage $V_r$ at the drain of the secondary reference FET 23. Referring once again to FIG. 1, each of the programmable current cells creates a different reference voltage $V_{r1}$ through $V_{rk}$ depending on the data words $C_1$ through $C_n$ associated with each programmable current cell. Each of these voltage reference values are used in various remote areas to set up drive currents for the LED outputs.

Each of the secondary reference voltages are connected to a group of LED driver FETs 24. For example, voltage reference $V_{r1}$ is connected to the gate of each of the LED driver FETs $24_{11}$ through $24_{1v}$. Similarly, reference voltage $V_{r2}$ is connected to the gate of each of the LED driver FETs $24_{21}$ through $24_{2v}$ and reference voltage $V_{ru}$ is connected to the gate of each of the LED driver FETs $24_{u1}$ through $24_{uv}$.

Each of the output drivers 24 is in series with a p-channel data FET $25_{ll}$ through $25_{uv}$. The data FETs are switches that are gated by data signals $D_{11}$ through $D_{uv}$. The presence or absence of the data signals determines whether each respective LED $26_{ll}$ through $26_{uv}$ will be illuminated. Since each LED is driven by a separate driver LED, the rise time and light output of each LED is independent of the status of the other LEDs.

In an exemplary embodiment, each of the programmable current cells provides a reference current for eight LEDs. Thus, the average light output of each group of eight LEDs can be independently adjusted to produce a printout that appears uniform at spatial frequencies to which the human eye is sensitive.

To increase the uniformity in the printhead light output, the light output of the LEDs are measured using nominal values for the programming data signals $C_l$ through $C_n$ for each programmable current cell. The light output data is stored in memory external to the printhead, and is manipulated with software to determine the optimum binary values needed for the programming data signals to compensate the printhead to produce its light output within specification. Criteria for the LED printhead include, among others, uniformity of light output, average magnitude of the light output and overall current consumption. Once the programming data signals are manipulated, the light output of the LEDs are once again tested, and the data manipulation process is repeated if necessary.

When the printhead is properly compensated, the final values for the programming data signals are saved and loaded into EPROMs, or some other memory device. The memory device may be resident on the printhead itself or it may reside elsewhere in the printer. Each time power is applied to the printhead, the programming data signals are latched to the gate of the programming control FETs $22_l$ through $22_n$ of each programmable current source 16.

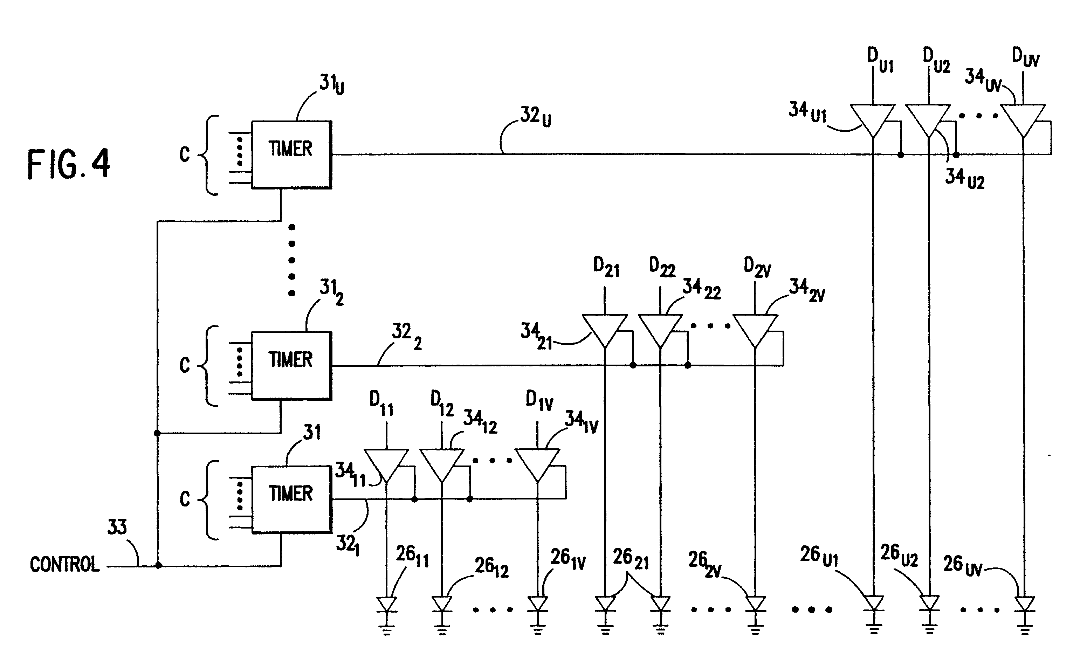

A second embodiment of the present invention is shown in FIG. 4. Programmable timers 31 each generate a timing pulse 32 in response to the presence or absence or programming data signals C and the presence or absence of control signals 33. In an exemplary embodiment, the programmable timers 31 are implemented with a digital counter. The programming data signals C determine the width of the timing pulse 32, and the control signals determine the rising and falling edges of the timing pulse.

Each of the timing pulses 32 are connected to the enable terminals of a group of output buffers 34. Thus an entire group of output buffers are enabled by a single timing pulse.

The output of each output buffer is connected to an LED 26. The output buffers have sufficient current to illuminate the LEDs and do so in response to the presence or absence of data signals D connected to the inputs of the output buffers, and in response to the presence or absence of timing pulses.

The method for modulating the light output to enhance its apparent uniformity remains similar to the first described embodiment where the light output was current modulated. For example, the light output of the printhead is measured using nominal values for the programming data signals C, the resulting data is manipulated to increase the apparent uniformity and new values for the programming data signals are calculated and stored in memory. This process is repeated as necessary.

Thus, the image produced by the printhead depends on the total exposure of each pixel or group of pixels. The exposure is a product of light intensity and duration of illumination. Light intensity may be controlled by current control as in the embodiment of FIGS. 1 and 2. The current available to all the LEDs in a group is uniform so that if enabled by a data signal, the current through each LED in the group is uniform. Variations in intensity of light as a function of current may be ignored. Alternatively, exposure may be controlled by pulse length as in the embodiment of FIG. 4. In such an embodiment, the time each LED in the group is on is preset to be the same for all the LEDs in the group, and the LEDs are switched by the data signals to be either on or off. Clearly, control of both current and pulse width could be used if desired.

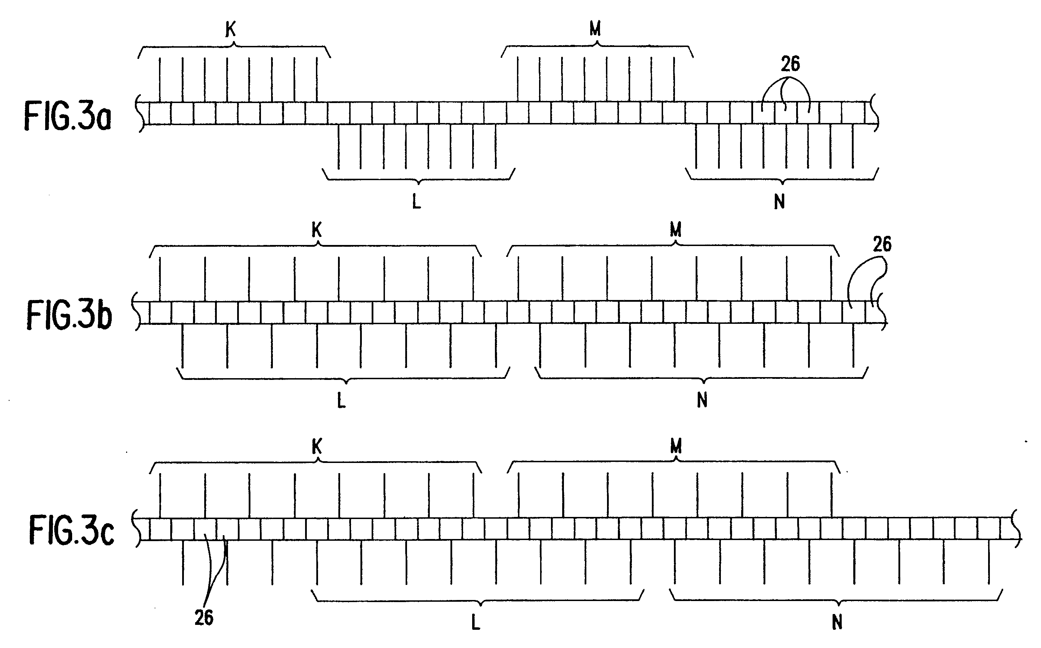

In one exemplary embodiment, the controlled LED groups K, L, M and N are placed in a single row in an end to end orientation as shown in FIG. 3a. In such an embodiment, the average exposure by group L is matched, or at least not greatly different from, the average exposure by the adjacent groups K and M, etc. Alternatively, the groups may be interleaved as shown in FIG. 3b or FIG. 3c. Each group extends a greater length along the printhead, but the average exposure by each group need not be as closely matched to adjacent groups to avoid exposure difference to which the human eye is sensitive.

It is not always preferable to make the average light output of each group of LEDs equivalent. For example, it may be desirable to introduce noise to the LED output at a spatial frequency to which the eye is less sensitive or to mask noise for which the eye is more sensitive. It is apparent that the above described invention will allow the light output of each group of eight LEDs to be individually manipulated to produce this result.

It should be apparent to one skilled in the art that other embodiments exist that are within the nature and principle of this invention. For example, it will be apparent that the circuits described can be modified to use either p- or n-channel FETs, MOSFETs, or bipolar transistors to accomplish the same purposes. Further, the circuits may be implemented discretely or on integrated chips. It is therefore intended that the above description shall be read as illustrative and not as limited to the preferred embodiments as described herein.

## Claims

1. A power supply for a light emitting diode printhead comprising a plurality of light emitting diodes subdivided into groups of light emitting diodes comprising:
means for enabling uniform exposure by all the light emitting diodes in a group in response to data signals; and
means for applying data signals to each light emitting diode.

2. A power supply as recited in claim 1 wherein the means for enabling uniform exposure comprises means for applying a uniform current for each light emitting diode in the group.

3. A power supply is recited in claim 1 wherein the means for enabling a uniform exposure comprises means for applying current for a uniform interval for each light emitting diode in the group.

4. A power supply as recited in claim 1 further comprising means for controlling the average exposure by a group of light emitting diodes to be similar to the average exposure by an adjacent group of light emitting diodes.

5. A light emitting diode printhead comprising:
a plurality of light emitting diodes in a row;
means for enabling a first group of light emitting diodes for uniform exposure of a photoreceptive surface in response to data signals;
means for enabling a second group of light emitting diodes for uniform exposure of a photoreceptive surface in response to data signals, the average exposure by the second group being similar to the average exposure by the first group;
means for applying data signals to each light emitting diode.

6. A light emitting diode printhead as recited in claim 5 wherein the first and second groups of light emitting diodes are adjacent each other along the row of light emitting diodes.

7. A light emitting diode printhead as recited in claim 5 wherein the first and second groups of light emitting diodes are interleaved with each other along the row of light emitting diodes.

8. A power supply for a light emitting diode (LED) printhead comprising:
a plurality of integrated circuit chips, each chip having a plurality of outputs for supplying current to each of a plurality of respective light emitting diodes;
means for applying a system reference voltage to each of the integrated circuit chips;
means for generating a chip reference voltage for each chip in response to the system reference voltage;
means for generating a plurality of light emitting diode reference currents in response to the chip reference voltage and the presence or absence of a plurality of programming data signals; and
means for applying the plurality of light emitting diode reference currents to respective light emitting diode inputs in response to the presence or absence of an enabling data signal for each light emitting diode input.

9. A power supply as recited in claim 8 wherein each of the plurality of light emitting diode reference currents supplies current to a distinct light emitting diode input.

10. A power supply as recited in claim 8 wherein each of the plurality of light emitting diode reference currents supplies current to a group of light emitting diode inputs.

11. A power supply for a light emitting diode printhead comprising:
a plurality of integrated circuit chips, each chip having a plurality of outputs for supplying current to each of a plurality of respective light emitting diodes;
means for generating timing signals for each of a plurality of light emitting diode groups in response to a plurality of programming data signals; and
means for applying a light emitting diode current to each light emitting diode in each light emitting diode group in response to the presence or absence of the timing signal for each group and in response to the presence or absence of an enabling data signal for each light emitting diode.

12. A programmable power supply for a light emitting diode printhead, comprising:
a primary reference FET;
a primary driver FET substantially similar to the primary reference FET, the gate of the primary driver FET being connected to the output of the primary reference FET;
means for passing a constant current through the primary reference FET;
current flow means for enabling current flow through the primary driver FET;
a plurality of secondary reference FETs;
a plurality of secondary driver FETs substantially similar to the secondary reference FETs, each secondary driver FET having an output for connection to an light emitting diode;
means for connecting the output of each secondary reference FET to the gate of a group of the secondary driver FETs;

means for passing a programmable current through the secondary reference FET coupled to the primary driver FET current flow means; and

means for enabling current flow from each secondary driver FET to its respective light emitting diode in response to a data signal.

13. A power supply as recited in claim 12 wherein the means for enabling current flow through the primary driver FET comprises a plurality of FETs connected in parallel to ground.

14. A power supply as recited in claim 12 wherein the means for enabling current flow through the secondary driver FET comprises a data FET in series with each secondary driver FET and means for applying a data signal to the gate of the data FET.

15. A power supply as recited in claim 12 wherein the means for passing a programmable current comprises:

a plurality of weighted FET groups, each group being connected in parallel to ground; and

means for enabling current flow from each group of binary weighted FETs through the secondary reference FET in response to a plurality of programming data signals.

16. A power supply as recited in claim 15 wherein the means for enabling current flow through the secondary reference FET comprises a programming control FET in series with each group of weighted FETs and means for applying a programming signal to the gate of the programming FET.

17. A power supply as recited in claim 15 wherein the weighted FET groups are binary weighted.

18. A method for enhancing apparent uniformity of images from a light emitting diode printhead comprising the steps of:

providing a row of light emitting diodes for exposure of a photoreceptive medium;

enabling the light emitting diodes in groups having a length along the row different from the distance to which the human eye is sensitive to apparent intensity differences; and

controlling each light emitting diode group's exposure of the photoreceptive medium.

19. A method as recited in claim 18 wherein the exposure is controlled by adjusting the current supplied to the light emitting diode groups.

20. A method as recited in claim 18 wherein the exposure is controlled by adjusting the time during which the light emitting diode groups are enabled.

21. A method as recited in claim 18 wherein the light emitting diode groups are interleaved.

22. A method for modulating the light output from a plurality of light emitting diodes on an light emitting diode printhead comprising the steps of:

placing a plurality of light emitting diodes in a row on a substrate;

providing current to each light emitting diode from a separate output driver;

regulating light emitting diode illumination by controlling the current from each of a plurality of output driver groups with a reference voltage and an identical pattern of programming data inputs for each group;

measuring the light output of the light emitting diodes;

adjusting the pattern of data inputs to achieve substantially equivalent light output from adjacent groups of light emitting diodes; and

storing the pattern of data inputs in memory on the light emitting diode printhead.

23. A method as recited in claim 22 wherein the regulating step comprises the step of controlling the length of time that current is provided to the light emitting diode groups with an identical pattern of programming data inputs for each group.

24. A method as recited in claim 23 comprising applying the stored pattern of data inputs to the groups of output drivers each time power is applied to the printhead.

25. A method as recited in claim 24 wherein the pattern of data inputs is stored in integrated circuit chips on the light emitting diode printhead.

FIG. 1

FIG. 2

EP 0 419 255 A2

EP 0 419 255 A2

FIG.3a

FIG.3b

FIG.3c

FIG.4

EP 0 419 255 A2